Europäisches Patentamt

European Patent Office

Office européen des brevets

(19)

(11) **EP 0 633 702 B1**

(12) **FASCICULE DE BREVET EUROPEEN**

(45) Date de publication et mention
de la délivrance du brevet:
**15.12.1999 Bulletin 1999/50**

(51) Int Cl.⁶: **H04N 9/31**

(21) Numéro de dépôt: **94401511.4**

(22) Date de dépôt: **01.07.1994**

(54) **Dispositif de visualisation couleurs**

Farbanzeigegerät

Color display device

(84) Etats contractants désignés:
**DE GB NL**

(30) Priorité: **09.07.1993 FR 9308470**

(43) Date de publication de la demande:
**11.01.1995 Bulletin 1995/02**

(73) Titulaire: **THOMSON-CSF**
**75008 Paris (FR)**

(72) Inventeurs:
- **Loiseaux, Brigitte**
  **F-92402 Courbevoie Cédex (FR)**
- **Joubert, Cécile**
  **F-92402 Courbevoie Cédex (FR)**
- **Huignard, Jean-Pierre**
  **F-92402 Courbevoie Cédex (FR)**
- **Joffre, Pascal**
  **F-92402 Courbevoie Cédex (FR)**
- **Nicolas, Cristophe**
  **F-92402 Courbevoie Cédex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**EP-A- 0 421 855**          **EP-A- 0 465 171**
**US-A- 5 042 921**

- **PATENT ABSTRACTS OF JAPAN vol. 12, no. 366
  (P-765) 30 Septembre 1988 & JP-A-63 118 125
  (HITACHI)**
- **PATENT ABSTRACTS OF JAPAN vol. 11, no. 383
  (P-646) 15 Décembre 1987 & JP-A-62 150 317
  (CASIO)**
- **PATENT ABSTRACTS OF JAPAN vol. 11, no. 40
  (P-544) 5 Février 1987 & JP-A-61 210 328 (SEIKO)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 633 702 B1

## Description

L'invention concerne un dispositif de visualisation couleurs et plus particulièrement un dispositif de visualisation couleurs à cristaux liquides.

Pour générer des images vidéo de grande dimension, on s'oriente actuellement vers l'utilisation de matrices actives à cristaux liquides (écran LCD) dans des dispositifs de projection.

La projection d'images couleurs est réalisable soit à partir de 3 écrans LCD chacun éclairé par l'une des 3 composantes primaires rouge, verte ou bleue (R, V, B), soit à partir d'un seul écran LCD trichrome qui est alors muni de filtres colorés.

L'intégration de filtres colorés R, V, B dans la structure de l'écran LCD permet de réaliser des dispositifs de projection d'images couleur de conception simple puisqu'ils sont uniquement constitués d'une source et d'un seul écran LCD. Ces dispositifs de projection dits "monovalve" restent néanmoins actuellement limités à la projection d'images de qualité médiocre et à faible résolution, compte tenu des inconvénients suivants :

- un faible rendement lumineux lié à la répartition spatiale de ces filtres colorés qui divise par 3 la transmission effective de l'écran LCD ;
- l'absorption non négligeable des filtres colorés limite de plus la puissance des sources lumineuses utilisables avec ces écrans ;
- le coût technologique pour la réalisation de ces écrans est élevé : il provient d'une part de la mise en oeuvre de ces filtres dans la cellule cristal liquide et d'autre part d'une densité d'éléments images (pixels) plus importante pour les écrans couleur que pour les écrans monochromes si l'on souhaite les réaliser dans des dimensions raisonnables (< 6 pouces de diagonale).

Le document EP 0 465 171 décrit un dispositif de visualisation ne possédant qu'un modulateur spatial de lumière (écran à cristal liquide) mais dont la séparation des gammes de couleurs nécessite trois séparateurs chromatiques.

Le dispositif selon l'invention permet de réaliser un projecteur monovalve LCD, dont le rendement lumineux est accru par rapport aux dispositifs habituels. Le gain théorique attendu est de 3 à 6. Ce dispositif met en oeuvre une structure particulièrement compacte pour réaliser l'éclairage couleur R, V, B de l'écran LCD d'un projecteur monovalve. Les avantages de ce dispositif peuvent se décrire comme suit :

- la suppression des étapes technologiques de réalisation des filtres colorés pour les écrans LCD à commande vidéo trichrome : la séparation chromatique est obtenue par une fonction de type réseau ;
- l'amélioration du rendement lumineux de projection grâce à la fonction de focalisation dans les pixels de l'écran LCD de la source blanche d'éclairage : un réseau de micro-lentilles cylindriques reporté sur la face avant de l'écran LCD permet de générer des lignes colorées R, V, B qui sont focalisées dans une dimension dans le plan du cristal liquide ;
- le pré-filtrage de la source et adaptation de la section du faisceau d'éclairage au format rectangulaire 16/9 de l'écran LCD peuvent être simultanément réalisés à partir du composant de séparation chromatique.

L'invention concerne donc un dispositif de visualisation couleurs comprenant

- une source de lumière émettant simultanément plusieurs gammes de composantes chromatiques ;
- un modulateur spatial de lumière comprenant plusieurs dots comportant chacun au moins un sous-pixel par gamme de composante chromatique à afficher ;
- au moins un séparateur chromatique séparant angulairement selon des directions différentes la lumière des différentes gammes chromatiques ;
- un réseau de lentilles permettant chacune de focaliser la lumière de chaque gamme chromatique sensiblement sur un sous-pixel ;

caractérisé en ce que le séparateur chromatique comprend un seul composant à microstructures de phases à variations d'indices obtenues par enregistrement optique dans un matériau photosensible.

Les différents objets et caractéristiques de l'invention apparaîtront plus clairement dans la description qui va suivre faite à titre d'exemple et dans les figures annexées qui représentent :

- la figure 1, un exemple de réalisation simplifié du dispositif selon l'invention ;
- les figures 2a à 2c, des exemples de dispositions des éléments images d'un écran à cristal liquide ;
- la figure 3, une vue détaillée du dispositif de la figure 1 ;
- la figure 4, une vue détaillée d'un élément image d'un écran à cristal liquide ;
- les figures 5a à 5d, différents modes de réalisation d'un séparateur chromatique selon l'invention ;
- la figure 6, le dispositif selon l'invention comportant un dispositif optique d'adaptation de grandissement ;
- les figures 7a et 7b, des dispositifs de séparation chromatiques par réseaux de diffraction ;
- la figure 8, un exemple de réalisation détaillée d'un dispositif selon l'invention ;
- les figures 9 et 10, des variantes de réalisation de l'invention.

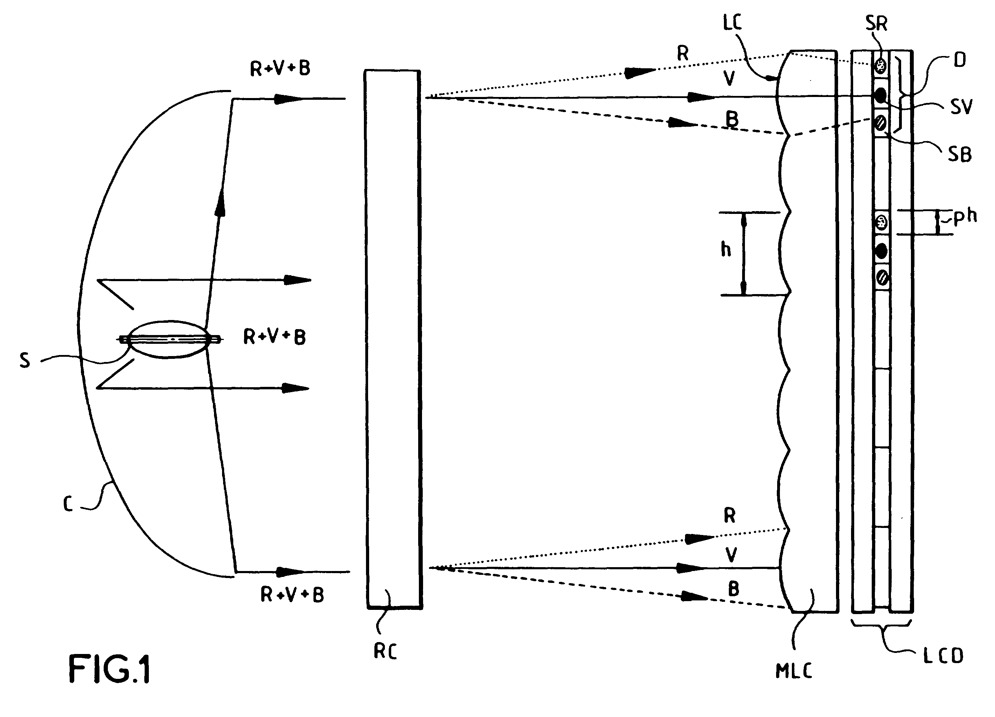

En se reportant à la figure 1, on va tout d'abord décrire un exemple de réalisation simplifié du dispositif selon l'invention. Ce dispositif comporte :

- une source blanche d'éclairage S comportant un système optique C de l'art connu pour collimater la lumière émise par la lampe ;
- un élément séparateur chromatique RC qui permet de séparer angulairement les trois primaires rouge, vert, bleu (R, V, B) de la source S suivant 3 directions choisies et selon l'invention ce séparateur est enregistré optiquement dans un matériau photosensible et est constitué alors de microstructures de phase (variations d'indices ou reliefs) ;
- un réseau de micro-lentilles cylindriques MLC disposé en avant de l'écran LCD (éventuellement directement sur la contre-lame du LCD) ;
- un écran à cristaux liquides (LCD) dépourvu de filtres colorés qui module spatialement la source d'éclairage en fonction des signaux vidéo trichromes R, V, B.

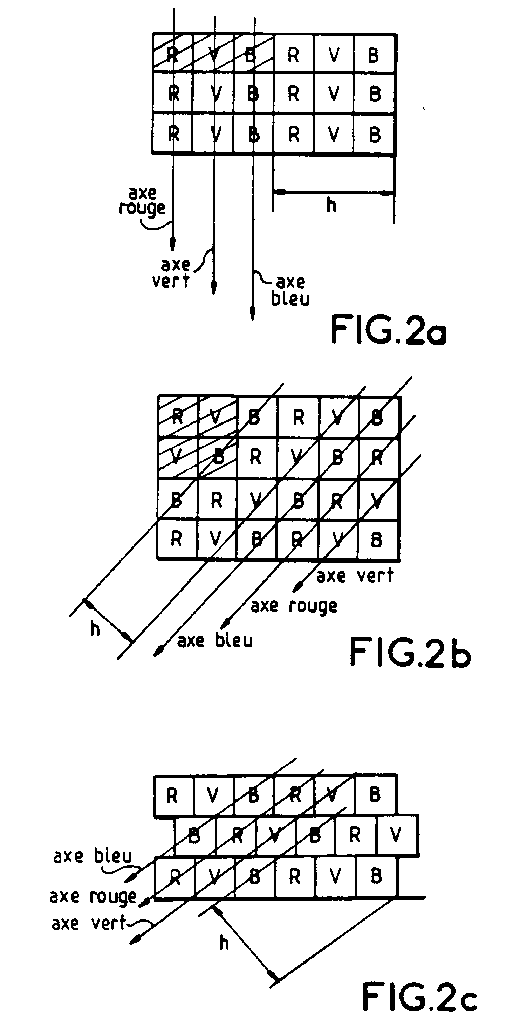

On rappelle que dans les écrans trichromes un pixel blanc D constitué de trois sous-pixels SR, SV, SB est généralement nommé dot. Les figures 2a à 2c donnent des exemples de répartitions de couleurs dans un dot.

La figure 2a représente une disposition selon laquelle les pixels d'une même couleur sont alignés selon une direction verticale.

La figure 2b représente une disposition selon laquelle les pixels d'une même couleur sont alignés selon une diagonale et se touchent les uns les autres.

La figure 2c représente une disposition selon laquelle les pixels d'une même couleur sont alignés selon une direction inclinée mais ne se touchent pas.

On notera donc qu'il est toujours possible de trouver un axe suivant lequel les filtres d'une même couleur sont disposés.

Dans le présent dispositif, les lentilles cylindriques seront orientées parallèlement à cet axe. Leur hauteur (h) correspond à la distance entre deux axes successifs de sous-pixels d'une même couleur.

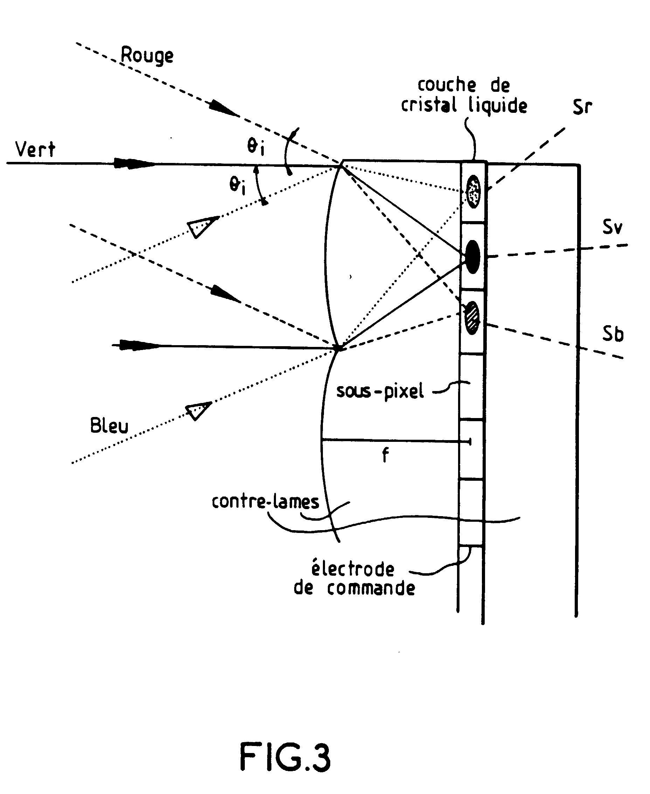

Le principe de fonctionnement du dispositif peut être décrit comme suit : la fonction du séparateur RC permet de séparer angulairement les trois composantes spectrales de la source d'éclairage collimatée. Ces trois bandes spectrales sont ensuite focalisées suivant trois lignes colorées parallèles dans le plan focal de chaque lentille cylindrique. Selon l'exemple de réalisation de la figure 1, détaillé en figure 3, le faisceau V de couleur verte est normal au plan focal des lentilles MLC et les faisceaux R et B (rouge et bleu) sont symétriques par rapport à cette normale et font un angle d'incidence $\theta i$. Par conséquent en adaptant d'une part l'angle d'incidence $\theta i$ de chaque composante spectrale sur les micro-lentilles cylindriques et d'autre part la focale f de ces micro-lentilles on peut réaliser simultanément :

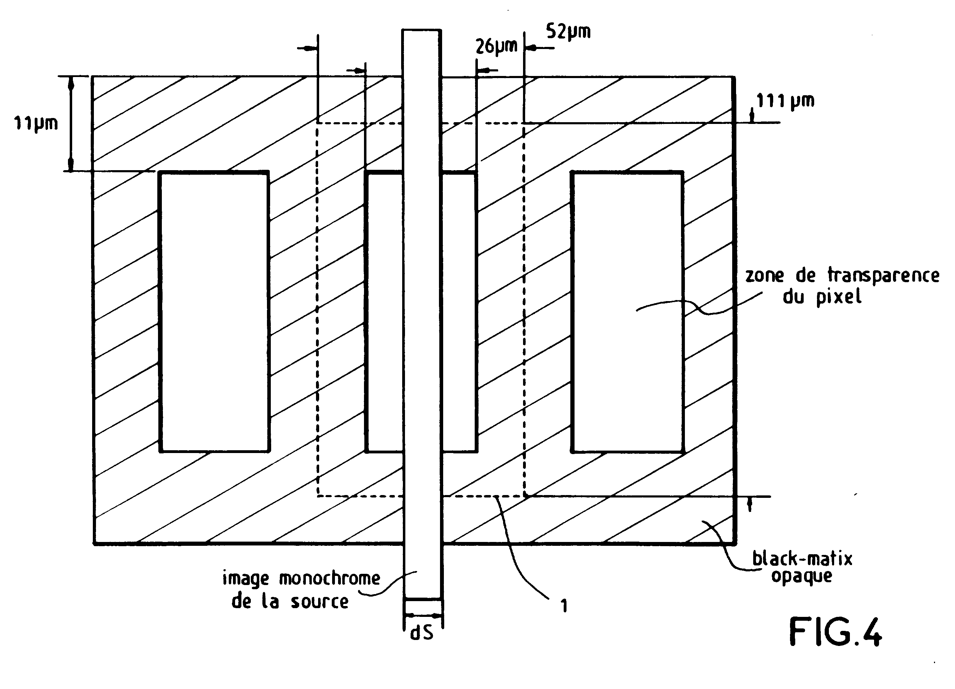

- la focalisation successive de chaque couleur dans le plan du cristal liquide et centrée sur chaque ligne de sous-pixel adressé par la même couleur (figure 3). Les caractéristiques ($\theta i$, f) du dispositif dépendent de la taille de l'écran LCD, du nombre de pixels et de la répartition des sous-pixels dans un dot ;
- un gain sur le taux de transmission de l'écran LCD lorsque la bande colorée focalisée à une dimension inférieure à celle du sous-pixel (figure 4). La valeur de ce gain dépend des paramètres suivants, l'ouverture de la micro-lentille cylindrique (f/h), l'étendue géométrique de la source d'éclairage (Es) et la taille de l'écran LCD caractérisé par sa diagonale (D).

La figure 4 représente un détail de conception d'un élément image d'un écran à cristal liquide. Un tel élément image comporte l'élément image 1 lui-même dont la surface utile est définie par un masque 2 (appelé couramment black matrix). Selon l'invention la surface utile de l'élément image est éclairée par le faisceau d'éclairement 3. Celui-ci peut être de dimension (en largeur sur la figure 4) sensiblement égale à celle de la surface utile. Cependant le faisceau 3 est de préférence de largeur inférieure à celle de la surface utile.

Dans ce dispositif on peut réaliser la fonction du séparateur RC suivant plusieurs principes :

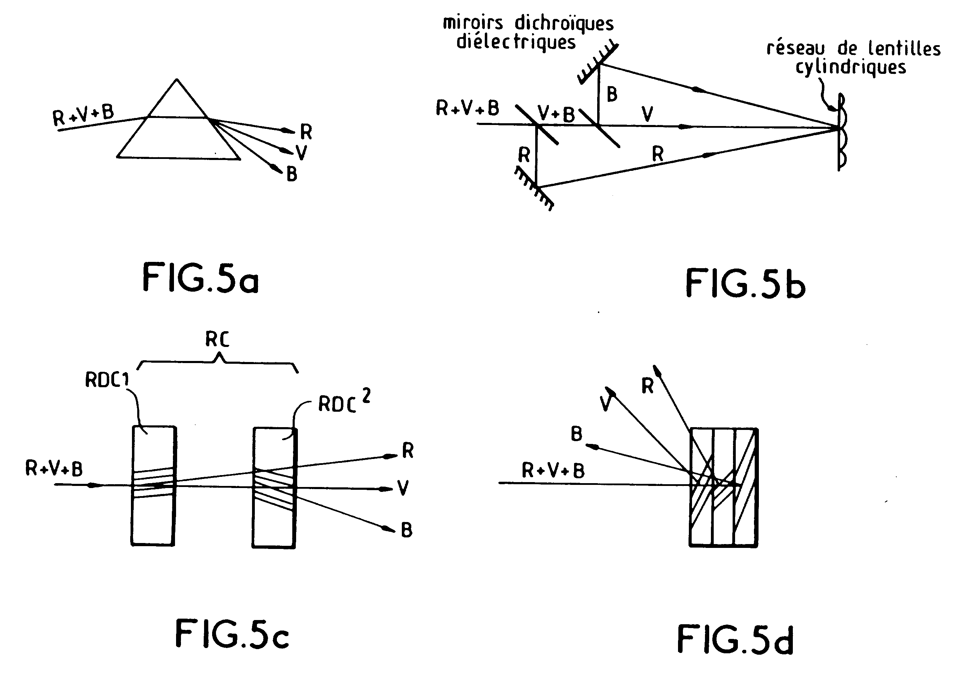

-a- des moyens d'optique classique tels que prismes dispersifs (figure 5a) permettant de séparer les composantes chromatiques R, V, B ou une association de filtres dichroïques diélectriques (figure 5b). On notera cependant que ces moyens peuvent conduire à des dispositifs d'éclairage assez encombrants ou coûteux ;

-b- des composants optiques diffractifs tels que l'association de réseaux soient en transmission (figure 5c) soient en réflexion (figure 5d). Selon le séparateur de la figure 5c, un premier réseau diffractif chromatique RDC1 reçoit un faisceau RVB selon une première direction permet de diffracter selon une deuxième direction, par exemple, la composante chromatique R, tandis que les composantes B et V ne sont pas déviées. Un deuxième réseau diffractif chromatique RDC2 permet de diffracter selon une troisième direction la composante B tandis que les composantes R et V ne sont pas déviées. A la sortie du séparateur RC on a donc un faisceau V de couleur verte dirigé selon la première direction, un faisceau R de couleur rouge selon la deuxième direction et un faisceau B de couleur bleue selon la troisième direction.

Selon le séparateur de la figure 5, on associe trois réseaux diffractifs RR1, RR2, RR3. Chacun d'eux réfléchit selon une direction déterminée la lumière d'une seule composante chromatique déterminée. On obtient ainsi en réflexion les trois faisceaux R, V, B selon trois directions différentes. Ces solutions permettent dans le cas de réseaux d'indice épais (cas des réseaux de Bragg) de réaliser avec une efficacité optique théorique de 100 %, des structures d'éclairage compactes. En effet ces fonctions ne nécessitent pour être efficaces que de faibles épaisseurs, typiquement inférieure à 100 microns et il est possible de multiplexer dans un même film plusieurs réseaux destinés chacun à la séparation des 3 bandes spectrales de la source. On peut de plus exploiter certaines propriétés spécifiques des composants diffractifs pour prépolariser l'éclairement ou anamorphoser la section circulaire du faisceau d'éclairage en une section elliptique mieux adaptée à un éclairage efficace des écrans LCD de format rectangulaire 16/9.

Dans ce dispositif on peut associer la fonction de séparation à l'écran LCD par les deux moyens suivants :

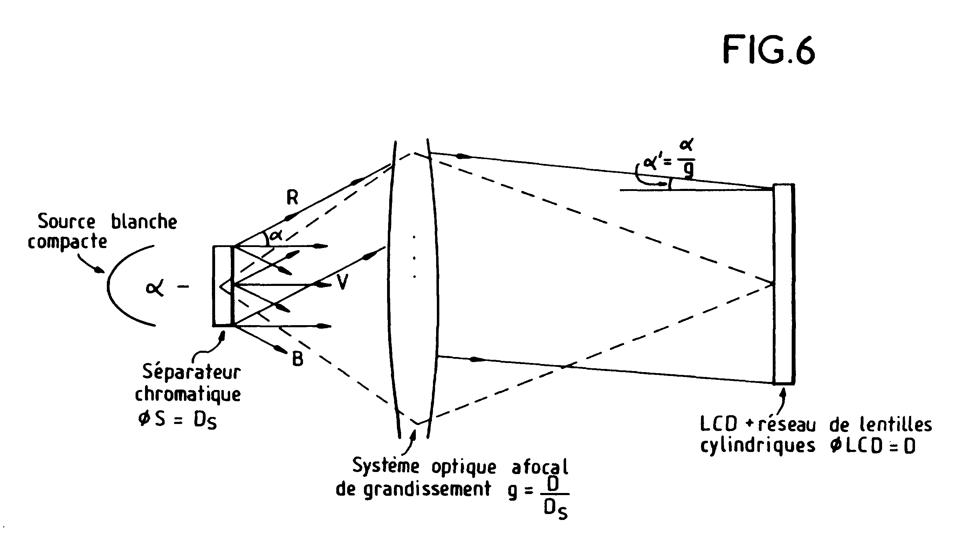

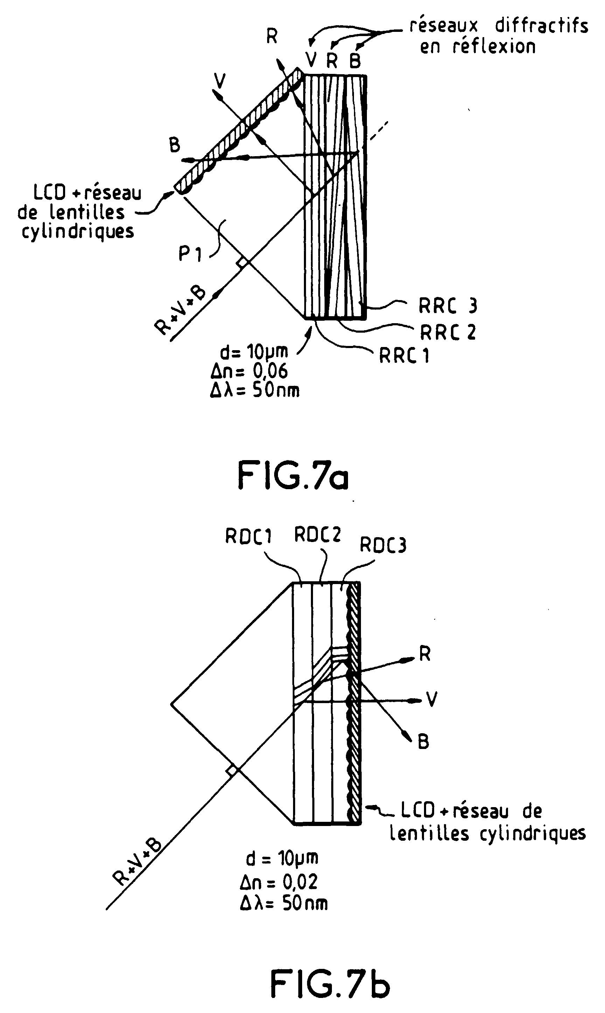

- l'écran LCD est positionné le plus près possible du séparateur RC comme dans les figures 7a, 7b de manière à ce que la perte de lumière soit minimale ;
- le séparateur RC est imagé sur l'écran LCD par un dispositif optique du type afocal permettant d'adapter la dimension (Ds) de la source blanche à la dimension (D) de l'écran LCD. Dans ce cas l'angle de séparation des primaires tiendra compte du grandissement g = D/Ds comme indiqué sur la figure 6.

Le séparateur chromatique RC de la figure 7a comporte trois séparateurs RRC1, RRC2, RRC3 permettant de réfléchir la lumière des bandes spectrales respectivement verte, rouge et bleue. Ces séparateurs sont accolés à la face hypoténuse d'un prisme P1 droit. La lumière entre par une face du prisme vers les séparateurs et est réfléchie vers l'autre face du prisme à laquelle est accolée le réseau de lentilles et l'écran à cristal liquide.

Le séparateur chromatique RC de la figure 7b possède trois éléments RDC1, RDC2, RDC3 fonctionnant en transmission. Ils sont accolés à un prisme et reçoivent la lumière sous incidence adapté à la périodicité des microstructures enregistrées dans les éléments RDC1 à RDC3. Par exemple, dans le cas d'une incidence de 45° ces éléments seront accolés à un prisme à 45°. Le réseau de lentilles et l'écran à cristal liquide sont accolés à ces séparateurs.

On propose ici un exemple de réalisation du dispositif adapté à une taille d'écran LCD possédant des sous-pixels R, V, B répartis en bandes verticales comme représenté en figure 2a.

## Caractéristiques de l'écran LCD

- format 16/9
- diagonale D = 5 pouces correspondant à un écran de 62.5 mm de hauteur notée H et de 111 mm de largeur notée L, et données par la relation L = 16.9.H ;
- répartition des pixels sur 560 lignes de 700 dots RVB. La taille (pl, ph) des sous-pixels correspondante est : pl = 52.4 microns, ph = 111 microns ;
- taux d'ouverture du pixel, au travers duquel la lumière est transmise, 45% dans la géométrie de pixel décrite sur la figure 4.

## Caractéristiques d'une micro-lentille cylindrique élémentaire LC du réseau de lentilles MLC

- la hauteur h est équivalente à la largeur d'un dot puisque la disposition des sous-pixels est en bandes verticales soit :

$$h = 3 \times pl = 157 \text{ microns}$$

- la longueur de la micro-lentille cylindrique élémentaire étant équivalente à la hauteur H de l'écran LCD ;
- distance focale f : on propose de réaliser dans cet exemple les micro-lentilles par moulage direct sur l'une des contre-lames de l'écran LCD. Compte tenu de la normalisation actuelle de cet élément on a :

$$f = 1.1 \text{ mm}$$

## Caractéristiques du séparateur chromatique RC

Chaque sous-pixel étant distant de pl dans le plan focal de la micro-lentille cylindrique, la valeur de l'angle $\theta i$ de séparateur angulaire des faisceaux dans l'air est donné, pour des petits angles, par la relation :

$$\theta i = n \text{ arctg } (pl/f)$$

soit dans notre exemple 4 degrés.

On donnera dans ce qui suit des exemples de réalisation de tels séparateurs.

## Caractéristiques de la source d'éclairage

Les caractéristiques d'étendue géométrique Es de la source d'éclairage S doivent être choisies de telle sorte que la dimension dS de l'image de la source dans le plan focal de la lentille MLC soit inférieure ou, au plus, égale à la largeur pl du sous-pixel. Dans le cas contraire on obtient une dessaturation des couleurs primaires produites par le dispositif, puisqu'il y a recouvrement des bandes colorées d'éclairage sur un même sous-pixel.

La valeur limite de l'étendue géométrique Es (max) de la source dépend de la taille de l'écran LCD.

Elle peut être exprimée de la manière suivante en fonction des différents paramètres du dispositif :

$$Es(max) = 0.5.D^2. (180/\pi.arctg\ (pl/2f))^2$$

où D représente la valeur de la diagonale de l'écran exprimée en pouces.

Dans l'exemple de dispositif proposé on obtient :

$$Es(max) = 25\ mm2.sr.$$

Les lampes à arc court de type Xénon qui possèdent des étendues géométriques inférieures à 15 mm2.sr sont tout à fait adaptées à ce dispositif.

**Gain sur le taux de transmission optique de l'écran LCD**

Les lampes à arc de type Xénon qui possèdent des étendues géométriques inférieures à Es(max) vont donc permettre d'obtenir une image de la source de taille dS inférieure à la taille du sous-pixel, dans une direction. Dans ces conditions on augmente artificiellement la valeur de la transmission optique de l'écran LCD puisque la source est focalisée dans la zone de transparence du pixel (figure 4).

On peut en première approximation considérer que dans l'exemple d'écran LCD de 5 pouces pour une dimension d'image telle que dS = pl/2, la source est parfaitement focalisée dans une dimension. Dans ce cas la transmission optique effective de l'écran LCD ne dépend que de l'obturation par les lignes d'électrodes de la matrice de TFT. Si on considère que ces électrodes lignes ont une largeur de 11 micromètres, on obtient les valeurs suivantes de transmission optique de l'écran LCD :

- 45 % de taux d'ouverture d'un sous-pixel de 52 x 111 micromètres, résultant de la technologie de réalisation de la matrice active TFT ;
- 90 % de transmission optique effective en utilisant le réseau de micro-lentilles cylindriques et une source d'étendue géométrique Es(max)/4 soit 6 mm2.sr.

Il est important de noter que, par rapport aux projecteurs de l'art connu qui utilisent un écran LCD muni de filtres colorés, le gain maximal apporté par ce dispositif sur le rendement lumineux est de 8 (3 pour le filtrage plus 1 pour l'absorption des filtres colorés, à multiplier par 2 grâce à la focalisation dans une dimension).

**Exemples de réalisation de micro-lentilles**

Un réseau de micro-lentilles peut être réalisé de la manière suivante. Les valeurs des distances focales des micro-lentilles correspondent, pour un indice, n, de 1.5, à un rayon de courbure R donné par la relation R = (n-1)f/n. Dans notre exemple on obtient R = 366 micromètres en considérant le cas d'une section sphérique de micro-lentille. De telles lentilles sont réalisables, en particulier avec divers procédés :

- gravure du profil de relief Δe par usinage mécanique ou ionique... Les profondeurs maximales de gravure se calculent à l'aide de la relation suivante $\Delta e_{max} = 9.pl^2/(8.R)$ ; soit 8 micromètres dans notre exemple ;
- micro-lentille à gradient d'indice (par exemple réalisée par inscription optique dans des matériaux photopolymères, ou par dopage obtenu par diffusion ionique) ;
- optique diffractive.

On notera que les ouvertures de ces micro-lentilles restent faibles (f/h = 7), ce qui ne nécessite donc pas la réalisation de lentilles astigmatiques de section hyperbolique.

La réalisation du réseau de micro-lentilles pourra être effectuée dans le cas des structures de relief, par un procédé de duplication de type moulage analogue à celui mis en oeuvre pour les copies de disques optiques.

**Exemple de réalisation du séparateur RC**

Nous proposons maintenant des exemples de réalisation de la fonction séparateur R basés sur l'utilisation de réseaux diffractifs permettant l'obtention de structures compactes.

On a représenté deux exemples de dispositifs, l'un fonctionnant en réflexion sur la figure 7a, l'autre fonctionnant en transmission sur la figure 7b. Dans les deux cas la fonction de séparation angulaire consiste en trois réseaux d'indice associés assurant chacun la déviation angulaire d'une des trois bandes spectrales R, V, B. Il est possible de les enregistrer soit séparément dans une superposition de trois couches de matériau contenant chacune un réseau séparateur, soit par multiplexage dans une couche unique de matériau.

Les caractéristiques du milieu d'enregistrement nécessaires pour obtenir la fonction désirée sont une variation d'indice δn < 0.1 et une épaisseur d < 50 microns. Elles peuvent être réalisées dans des matériaux de type photopolymère (matériau du type fabriqué par DU PONT DE NEMOURS, gélatine bichromatée ...).

<u>Séparateur en transmission</u>

- pas du réseau : 0.47 micromètres
- angle de séparation 4 degrés

- épaisseur : d = 10 micromètres.
- variation d'indice : δn = 0.02
- efficacité de 100 % pour la longueur centrale de 540 nm avec une bande spectrale à 3 dB de 50 nm environ (figure 7b).

Séparateur en réflexion

- pas du réseau : 0.25 micromètres
- séparation angulaire 4 degrés
- épaisseur : d = 10 micromètres
- variation d'indice : δn = 0.06
- efficacité de 100 % pour la longueur centrale de 540 nm avec une bande spectrale à 3 dB de 50 nm environ (figure 7a).

**Exemples de systèmes de projection associé au dispositif**

Le dispositif d'éclairage proposé ne permet pas d'utiliser de lentille de champ avant l'écran comme cela est fait dans les structures habituelles de projection.

Afin de réduire la pupille de l'optique de projection, une première solution consiste à utiliser une lentille de champs après l'écran LCD. Les angles des rayons moyens émergents du LCD sont d'environ ± 4 degrés, ce qui impose l'utilisation d'une lentille de champ de type Fresnel de distance focale F si l'on souhaite conserver un tirage t) faible et une ouverture réduite pour l'optique de projection (cette architecture de projection faisant partie de l'art connu : projecteur SHARP à micro-lentilles XVP1).

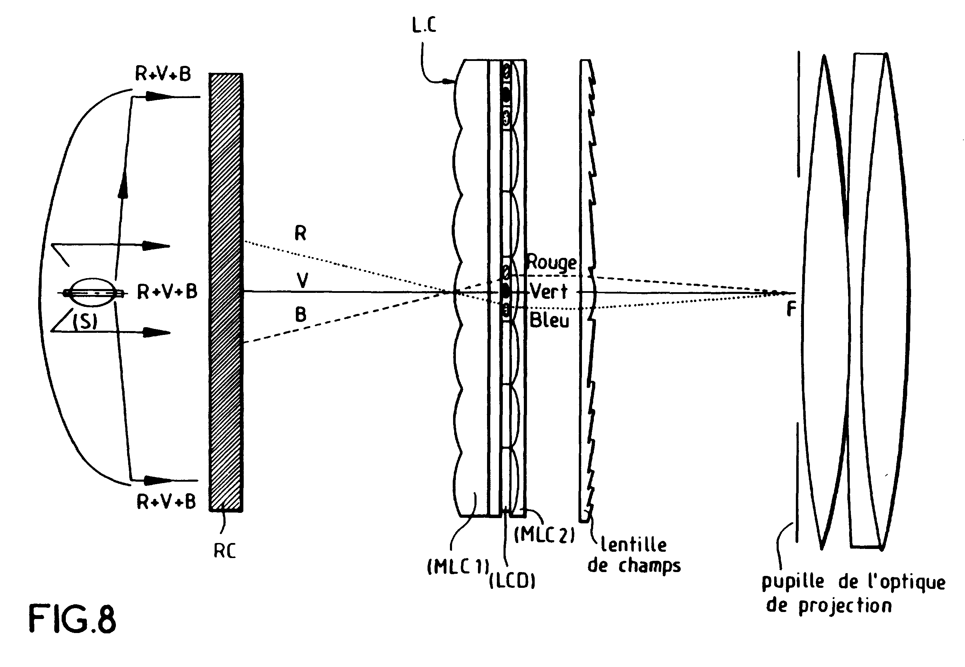

Une autre solution consiste à utiliser en plus de la lentille de champs disposée après l'écran LCD, un second réseau de lentilles cylindriques (MLC2) disposé sur la deuxième contre-lame de l'écran LCD, de mêmes distances focales que celles du premier réseau (MLC1), pour collimater les rayons moyens émergents du LCD, comme indiqué sur l'exemple de la figure 8. L'avantage de ce dispositif étant de pouvoir utiliser une optique de projection dont l'ouverture est plus faible que dans la première solution proposée.

Les différents modes de réalisation de micro-lentilles cylindriques décrits précédemment peuvent être utilisés pour la réalisation de ce deuxième réseau de lentilles (MLC2). Néanmoins, cet élément doit être mince (épaisseur Δe < 100 micromètres) pour jouer correctement son rôle de lentille de champs : la réalisation des micro-lentilles de type Fresnel apparaît donc particulièrement adaptée à leur réalisation puisqu'une variation d'indice de 0.2 permet de les réaliser dans un film d'épaisseur Δe = 2 microns, qui est compatible avec un fonctionnement correct de la couche de cristal liquide de l'écran LCD.

**Extension du dispositif**

- utilisation de matrices de micro-lentilles sphériques
- utilisation de 2 réseaux de micro-lentilles cylindriques croisées
- utilisation de sources de lumière linéaires, l'axe de la source étant parallèle aux lentilles cylindriques
- application aux écrans de grandes dimensions à vision directe
- application aux projecteurs utilisant 3 écrans LCD monochromes
- compatibilité avec les solutions d'éclairage polarisé (Demandes de Brevets français n° 90 10251 et 91 09997) ou des modulateurs autres que LCD qui permettent l'utilisation des deux composantes de polarisation de la lumière (PDLC, solution à micro-réseau de la Demande de Brevet français n° 91 08813).

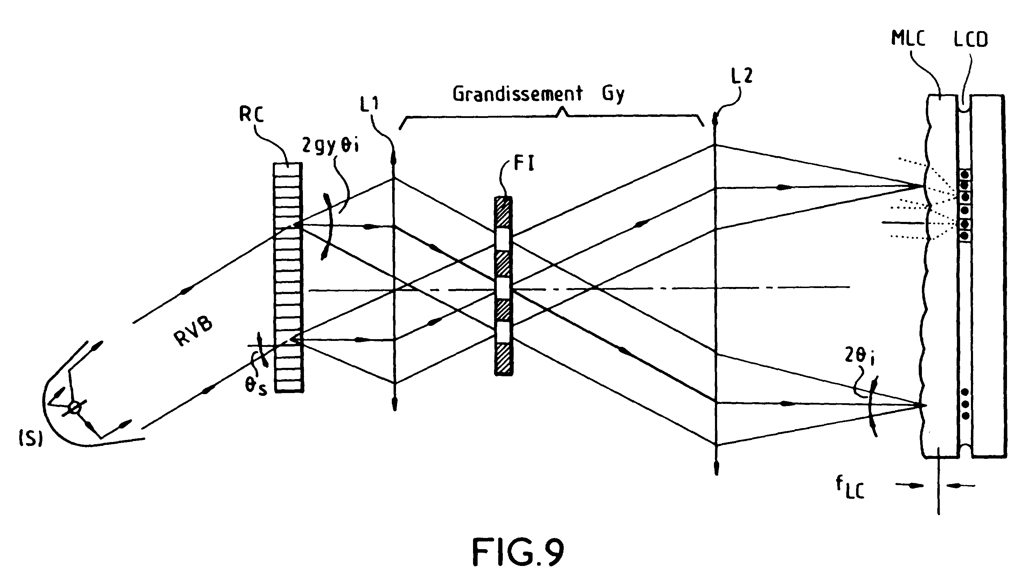

La figure 9 représente un dispositif permettant d'assurer un filtrage des différentes couleurs et de moduler en intensité chaque couleur ou de leur donner un "poids" (luminance et chrominance).

Entre le séparateur RC et le réseau de micro-lentilles sont placés une première lentille L1, un filtre spatial FI et une deuxième lentille L2.

L'optique OP, associée à la source S, transmet au séparateur RC un faisceau de rayons parallèles RGB. Le séparateur RC sépare ce faisceau en plusieurs faisceaux (un rouge, un vert, un bleu) eux-mêmes de rayons parallèles mais de directions différentes. La première lentille L1 focalise chacun de ces faisceaux dans son plan focal. Le filtre FI est situé dans ce plan focal et possède, à chaque zone de focalisation des faisceaux de couleurs, un filtre spatial élémentaire. Chacun de ces filtres spatiaux élémentaires ne laisse passer uniquement que la lumière focalisée dans la zone correspondante. De plus, certains filtres élémentaires peuvent comporter des modulateurs d'intensité pour moduler la lumière. Par exemple, les filtres élémentaires correspondant à une couleur déterminée peuvent comporter chacun un atténuateur pour réduire l'intensité de cette couleur par rapport aux autres couleurs. Cela permet de réaliser un réglage de chrominance du système.

La deuxième lentille L2 est située de telle façon que son plan focal image coïncide avec le plan focal objet de la lentille L1 et donc du filtre FI. Chaque faisceau de couleur reçu par la lentille L2 est donc collimaté par celle-ci et le réseau de microlentilles MLC reçoit des faiscceaux de couleur à rayons parallèles. Chaque micro-lentille du réseau MLC focalise une partie de chacun de ces faisceaux sur un pixel de l'écran LCD;

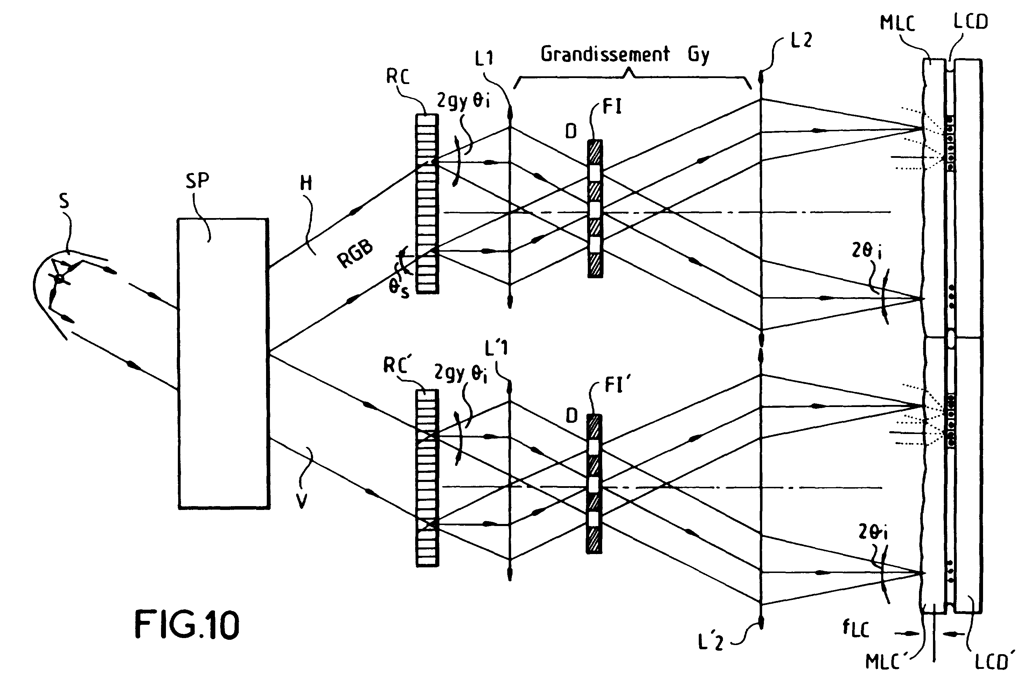

La figure 10 représente un exemple de combinaison de deux dispositifs tels que celui de la figure 9 de façon à traiter les deux polarisations. La lumière émise par la source S est transmise à un séparateur de polarisations SP qui fournit deux faisceaux H et V de polarisations orthogonales. Ce séparateur SP peut être un séparateur holographique tel que cela est connu dans la technique (voir Demandes de Brevets français n° 91 09997 ou 91 15641). Chaque faisceau H et V est traité par un dispositif tel que celui de la figure 10. Le faisceau H est traité par le dispositif RC, L1, FI, L2, MLC, LCD. Le faisceau V est traité par le dispositif RC', L'1, FI', L'2, MLC', LCD'. Les deux écrans LCD sont placés côte à côte et permettent d'afficher chacun la moitié d'une image. Selon une application préférée l'ensemble LCD-LCD' permet ainsi d'afficher une image rectangulaire par exemple de format 16 x 9.

## Revendications

1. Dispositif de visualisation couleurs comprenant

   - une source de lumière (S) émettant simultanément plusieurs gammes de composantes chromatiques (R, V, B) ;
   - un modulateur spatial de lumière (LCD) comprenant plusieurs dots comportant chacun au moins un sous-pixel par gamme de composante chromatique à afficher ;
   - au moins un séparateur chromatique (RC) séparant angulairement selon des directions différentes la lumière des différentes gammes chromatiques (R, V, B) ;
   - un réseau de lentilles (MLC) permettant chacune de focaliser la lumière de chaque gamme chromatique sensiblement sur un sous-pixel ;

   caractérisé en ce que le séparateur chromatique comprend un seul composant à microstructures de phases à variations d'indices obtenues par enregistrement optique dans un matériau photosensible.

2. Dispositif selon la revendication 1, caractérisé en ce que le séparateur comporte trois couches de matériaux superposés enregistrées séparément.

3. Dispositif selon la revendication 1, caractérisé en ce que le séparateur comporte une couche unique de matériau dans laquelle plusieurs réseaux sont enregistrés par multiplexage.

4. Dispositif selon l'une des revendications 1 à 3, caractérisé en ce qu'il comporte :

   - une lentille focalisant en des points distincts ou selon des lignes distinctes contenues dans un plan déterminé la lumière des différentes gammes chromatiques ;
   - au moins un filtre spatial (FI) situé selon ce plan déterminé et filtrant sélectivement la lumière des différentes gammes chromatiques.

5. Dispositif selon l'une des revendications 1 à 3, caractérisé en ce que le réseau de lentilles (MLC) est accolé au modulateur spatial de lumière (LCD) et comporte un réseau de lentilles cylindriques, chaque lentille cylindrique étant disposée parallèlement à une ligne de dots.

6. Dispositif selon la revendication 5, caractérisé en ce que le réseau de lentilles est de dimensions sensiblement égales à celles du modulateur spatial de lumière.

7. Dispositif selon la revendication 6, caractérisé en ce que la largeur de chaque lentille est sensiblement égale à celle d'une bande de dot.

8. Dispositif selon l'une des revendications 1 à 3, caractérisé en ce que le modulateur spatial de lumière est un écran à cristal liquide.

9. Dispositif selon l'une des revendications 1 à 3, caractérisé en ce qu'il comporte un prisme, le séparateur (RC) étant accolé sur l'une des faces du prisme et recevant la lumière de la source sous incidence adaptée à la périodicité des microstructures de phase.

10. Dispositif selon la revendication 9, caractérisé en ce que le séparateur (RC) fonctionne en réflexion et transmet la lumière à une face de sortie du prisme à laquelle est accolé l'ensemble réseau de lentilles (MLC) et modulateur spatial de lumière (LCD).

11. Dispositif selon la revendication 9, caractérisé en ce que le séparateur (RC) fonctionne en transmission et est accolé à l'ensemble réseau de lentille (MLC) et modulateur spatial de lumière (LCD).

12. Dispositif selon la revendication 4, caractérisé en ce qu'il comporte une deuxième lentille (L2) recevant la lumière du filtre spatial (FI) et transmet des faisceaux de rayons parallèles au réseau de microlentilles (MLC).

13. Dispositif selon l'une des revendications 1 à 3, caractérisé en ce qu'une composante chromatique de la lumière (V) n'est pas déviée par le séparateur et conserve sa direction de propagation après traversée du séparateur, tandis que deux autres composantes chromatiques sont déviées symétriquement par rapport à cette direction de propagation.

14. Dispositif selon la revendication 1, caractérisé en ce qu'il comporte deux dispositifs de visualisation similaires juxtaposés ainsi qu'un séparateur de polarisations situé entre la source (S) et ces dispositifs de visualisation, ce séparateur transmettant la lumière polarisée selon une première direction à l'un des dispositifs de visualisation et la lumière polarisée selon une deuxième direction perpendiculaire à la première direction, à l'autre dispositif de visualisation.

**Patentansprüche**

1. Farbanzeigevorrichtung mit

   - einer Lichtquelle (S), die gleichzeitig mehrere Spektralbereiche von Farbkomponenten (R, G, B) aussendet;
   - einem räumlichen Lichtmodulator (LCD), der mehrere Punkte umfaßt, von denen jeder wenigstens ein Subpixel pro anzuzeigendem Farbkomponenten-Spektralbereich umfaßt;
   - wenigstens einer Farbtrennvorrichtung (RC), die das Licht der verschiedenen Farbspektralbereiche (R, G, B) entlang unterschiedlichen Richtungen unter verschiedenen Winkeln trennt;
   - einem Gitter (MLC) aus Linsen, von denen jede das Licht jedes Farbspektralbereiches genau auf ein Subpixel fokussieren kann;

   dadurch gekennzeichnet, daß die Farbtrennvorrichtung ein einziges Bauteil mit Mikrostrukturen mit in Phasen variierenden Brechungsindizes umfaßt, die durch optisches Beschreiben eines lichtempfindlichen Materials erzeugt wurden.

2. Vorrichtung nach Anspruch 1, dadurch gekennzeichnet, daß die Trennvorrichtung drei übereinanderliegende, getrennt beschriebene Materialschichten umfaßt.

3. Vorrichtung nach Anspruch 1, dadurch gekennzeichnet, daß die Trennvorrichtung eine einzige Multiplexierung mit mehreren Gittern beschriebene Materialschicht umfaßt.

4. Vorrichtung nach einem der Ansprüche 1 bis 3, dadurch gekennzeichnet, daß sie

   - eine Linse, die das Licht der verschiedenen Farbspektralbereiche auf getrennte Punkte oder entlang getrennter Linien fokussiert, die in einer bestimmten Ebene liegen; und
   - wenigstens ein Raumfilter (FI) umfaßt, das in der bestimmten Ebene liegt und das Licht der verschiedenen Farbspektralbereiche selektiv filtert.

5. Vorrichtung nach einem der Ansprüche 1 bis 3, dadurch gekennzeichnet, daß das Linsengitter (MLC) an den räumlichen Lichtmodulator (LCD) angefügt ist und ein Gitter aus zylindrischen Linsen umfaßt, von denen jede parallel zu einer Punktlinie angeordnet ist.

6. Vorrichtung nach Anspruch 5, dadurch gekennzeichnet, daß die Bemessungen des Linsengitters im wesentlichen denen des räumlichen Lichtmodulators entsprechen.

7. Vorrichtung nach Anspruch 6, dadurch gekennzeichnet, daß die Größe jeder Linse im wesentlichen der eines Punktstreifens entspricht.

8. Vorrichtung nach einem der Ansprüche 1 bis 3, dadurch gekennzeichnet, daß der räumliche Lichtmodulator aus einem Flüssigkristallbildschirm besteht.

9. Vorrichtung nach einem der Ansprüche 1 bis 3, dadurch gekennzeichnet, daß sie ein Prisma umfaßt, wobei die Trennvorrichtung (RC) an eine der Seiten des Prismas angefügt ist und das Licht von der Quelle unter einem Einfallswinkel empfängt, der an die Periodizität der Phasen aufweisenden Mikrostrukturen angepaßt ist.

10. Vorrichtung nach Anspruch 9, dadurch gekennzeichnet, daß die Trennvorrichtung (RC) im Reflexionsbetrieb arbeitet und das Licht auf eine Ausgangsseite des Prismas richtet, an die der aus dem Linsengitter (MLC) und dem räumlichen Lichtmodulator (LCD) bestehende Komplex angefügt ist.

11. Vorrichtung nach Anspruch 9, dadurch gekennzeichnet, daß die Trennvorrichtung (RC) im Transmissionsbetrieb arbeitet und an den aus dem Linsengitter (MLC) und dem räumlichen Lichtmodulator (LCD) bestehenden Komplex angefügt ist.

12. Vorrichtung nach Anspruch 4, dadurch gekennzeichnet, daß sie eine zweite Linse (L2) umfaßt, die das Licht von dem Raumfilter (FI) empfängt und parallele Strahlenbündel zum Gitter (MLC) aus Mikrolinsen überträgt.

13. Vorrichtung nach einem der Ansprüche 1 bis 3, dadurch gekennzeichnet, daß eine Farbkomponente (G) des Lichts nicht von der Trennvorrichtung abgelenkt wird und ihre Ausbreitungsrichtung nach Passieren der Trennvorrichtung beibehält, während zwei weitere Farbkomponenten symmetrisch zu dieser Ausbreitungsrichtung abgelenkt werden.

14. Vorrichtung nach Anspruch 1, dadurch gekennzeichnet, daß sie zwei gleiche nebeneinanderliegende Anzeigevorrichtungen sowie eine Polarisationstrennvorrichtung umfaßt, die zwischen der Quelle (S) und den Anzeigevorrichtungen liegt, das entlang einer ersten Richtung polarisierte Licht auf eine der Anzeigevorrichtungen und das entlang einer zweiten, senkrecht zur ersten Richtung stehenden Richtung polarisierte Licht auf die andere Anzeigevorrichtung richtet.

## Claims

1. Colour display device comprising:

   - a light source (S) which simultaneously emits several ranges of chromatic components (R, G, B);
   - a spatial light modulator (LCD) comprising several dots, each having at least one subpixel per range of chromatic component to be displayed;
   - at least one colour splitter (RC) which splits the light of the various chromatic ranges (R, G, B) angularly along different directions;
   - an array of lenses (MLC), each lens allowing the light of each chromatic range to be focused substantially on one subpixel;

   characterized in that the colour splitter comprises a single component having phase microstructures with index variations obtained by optical recording in a photosensitive material.

2. Device according to Claim 1, characterized in that the splitter has three layers of separately recorded superimposed materials.

3. Device according to Claim 1, characterized in that the splitter comprises a single layer of material in which several arrays are recorded by multiplexing.

4. Device according to one of Claims 1 to 3, characterized in that it comprises:

   - a lens which focuses the light of various chromatic ranges onto separate points or along separate lines contained in a defined plane;
   - at least one spatial filter (FI) lying in this defined plane and selectively filtering the light of the various chromatic ranges.

5. Device according to one of Claims 1 to 3, characterized in that the array of lenses (MLC) is bonded to the spatial light modulator (LCD) and comprises an array of cylindrical lenses, each cylindrical lens being arranged parallel to a line of dots.

6. Device according to Claim 5, characterized in that the array of lenses has dimensions approximately equal to those of the spatial light modulator.

7. Device according to Claim 6, characterized in that the width of each lens is approximately equal to that of a band of dots.

8. Device according to one of Claims 1 to 3, characterized in that the spatial light modulator is a liquid-crystal screen.

9. Device according to one of Claims 1 to 3, characterized in that it comprises a prism, the splitter (RC) being bonded to one of the faces of the prism and receiving the light from the source at an angle of incidence appropriate to the periodicity of the phase microstructures.

10. Device according to Claim 9, characterized in that the splitter (RC) operates in reflection mode and transmits the light to an exit face of the prism to which the array of lenses (MLC)/spatial light modulator (LCD) assembly is bonded.

11. Device according to Claim 9, characterized in that the splitter (RC) operates in transmission mode and is bonded to the lens array (MLC)/spatial light modulator (LCD) assembly.

12. Device according to Claim 4, characterized in that it comprises a second lens (L2) which receives the light from the spatial filter (FI) and transmits beams of rays parallel to the array of microlenses (MLC).

13. Device according to one of Claims 1 to 3, characterized in that one chromatic component (G) of the light is not deflected by the splitter and retains its direction of propagation after passing through the splitter, while two other chromatic components are deflected symmetrically with respect to this direction of propagation.

14. Device according to Claim 1, characterized in that it comprises two juxtaposed similar display devices and a polarization splitter lying between the source (S) and these display devices, this splitter sending the light polarized in a first direction to one of the display devices and the light polarized in a second direction, perpendicular to the first direction, to the other display device.

FIG.1

axe rouge

axe vert

axe bleu

h

FIG.2a

axe vert

axe rouge

h

axe bleu

FIG.2b

axe bleu

axe rouge

axe vert

h

FIG.2c

Rouge

Vert

$\theta_i$

$\theta_i$

Bleu

couche de
cristal liquide

Sr

Sv

Sb

sous-pixel

f

contre-lames

électrode
de commande

FIG.3

FIG.4

52μm

26μm

11μm

111 μm

zone de transparence
du pixel

image monochrome
de la source

black-matix
opaque

1

dS

EP 0 633 702 B1

R+V+B

R
V
B

FIG.5a

miroirs dichroïques diélectriques

réseau de lentilles cylindriques

R+V+B

V+B

B

V

R

R

FIG.5b

RC

RDC1

RDC²

R+V+B

R
V
B

FIG.5c

R

V

B

R+V+B

FIG.5d

EP 0 633 702 B1

# FIG.6

Source blanche compacte

Séparateur chromatique $\phi S = D_S$

$\alpha'=\dfrac{\alpha}{g}$

Système optique afocal de grandissement $g = \dfrac{D}{D_S}$

LCD + réseau de lentilles cylindriques $\phi LCD = D$

EP 0 633 702 B1

réseaux diffractifs
en réflexion

V R B

R

V

B

LCD + réseau
de lentilles
cylindriques

P 1

R + V + B

RRC 3
RRC 2
RRC 1

d = 10µm
Δn = 0,06
Δλ = 50nm

## FIG.7a

RDC1   RDC2   RDC3

R

V

B

R + V + B

LCD + réseau de
lentilles cylindriques

d = 10µm
Δn = 0,02
Δλ = 50 nm

## FIG.7b

R+V+B

R+V+B

(S)

R+V+B

RC

R

V

B

L.C

Rouge

Vert

Bleu

(MLC 1)

(LCD)

(MLC 2)

lentille
de champs

F

pupille de l'optique
de projection

FIG.8

EP 0 633 702 B1

FIG.9

FIG.10

EP 0 633 702 B1